Europäisches Patentamt

European Patent Office

Office européen des brevets

(19)

(11) Numéro de publication: **0 209 185**
**B1**

(12) **FASCICULE DE BREVET EUROPEEN**

(45) Date de publication du fascicule du brevet:
02.05.90

(51) Int. Cl.⁴: **H04B 7/26**, H04Q 7/04

(21) Numéro de dépôt: 86201188.9

(22) Date de dépôt: 07.07.86

(54) Procédé et dispositif de recherche de canal libre pour un système de radio mobile.

(30) Priorité: 09.07.85 FR 8510490

(43) Date de publication de la demande:
21.01.87 Bulletin 87/4

(45) Mention de la délivrance du brevet:
02.05.90 Bulletin 90/18

(84) Etats contractants désignés:
BE CH DE FR GB IT LI SE

(56) Documents cités:
EP-A- 0 038 518
EP-A- 0 145 098
DE-A- 2 537 683
DE-A- 2 937 018

(73) Titulaire: TELECOMMUNICATIONS
RADIOELECTRIQUES ET TELEPHONIQUES T.R.T.,
88, rue Brillat Savarin, F-75013 Paris(FR)

(84) Etats contractants désignés: FR

(73) Titulaire: N.V. Philips' Gloeilampenfabrieken,
Groenewoudseweg 1, NL-5621 BA Eindhoven(NL)

(84) Etats contractants désignés: BE CH DE GB IT LI SE

(72) Inventeur: Alexis, Roger Pierre Joseph SOCIETE CIVILE
S.P.I.D, 209 rue de l'Université, F-75007 Paris(FR)

(74) Mandataire: Chaffraix, Jean et al, Société Civile
S.P.I.D. 209, rue de l'Université, F-75007 Paris(FR)

**Description**

L'invention concerne un procédé de recherche de canal libre pour un système de radio mobile à réseau cellulaire dans lequel chaque canal de la voie de communication montante est associé à un canal déterminé de la voie de communication descendante pour former un canal duplex assurant la communication entre l'une quelconque des stations fixes et l'une quelconque des stations mobiles, procédé selon lequel, pour la recherche d'un canal duplex libre entre une station fixe F et une station mobile M,
- dans la station fixe F sont détectés les canaux duplex occupés dans la voie montante pour lesquels le niveau de puissance reçu est supérieur à un premier seuil déterminé et les adresses desdits canaux occupés sont transmis par l'un des canaux d'une voie sémaphore formée d'intervalles de temps équidistants alloués successivement et de façon périodique à toutes les stations fixes d'un motif de cellules constituant le réseau cellulaire,
- dans la station mobile M, doivent être déterminées les adresses des canaux duplex occupés dans la voie descendante pour lesquels le niveau de puissance reçu est supérieur à un deuxième seuil déterminé, un canal duplex libre étant choisi parmi ceux ayant une adresse différente de celles des canaux occupés à déterminer dans la station mobile M.

L'invention concerne également le dispositif mettant en oeuvre ce procédé dans les stations fixes et mobiles.

Un tel procédé de recherche de canal libre pour un système de radiomobile cellulaire a été décrit dans la demande de brevet français 2 556 532 déposée le 9 décembre 1983 au nom de la demanderesse (correspond au document EP-A 0 145 098). Ce procédé a l'avantage de permettre d'affecter à chaque cellule du réseau l'ensemble des canaux de communication alors que dans les solutions classiques, cet ensemble de canaux est réparti dans un groupe de cellules appelé motif, ce motif étant répété dans tout le réseau de communication.

Mais la mise en oeuvre de ce procédé connu peut présenter des difficultés dans certains types de systèmes de radio mobile, en ce qui concerne la détermination dans une station mobile des canaux occupés dans la voie de communication descendante.

Cette mise en oeuvre n'est en effet commode que dans les systèmes du type à accès multiple à répartition dans le temps (en abrégé systèmes AMRT) dans lesquels les canaux de communication formant la voie montante et la voie descendante sont des canaux temporels multiplexés dans le temps. Dans un système AMRT, une station mobile comporte un récepteur à large bande recevant séquentiellement tous les canaux de la voie descendante de sorte qu'il est aisé dans cette station mobile de détecter ceux de ces canaux qui sont occupés en mesurant simplement le niveau du signal reçu dans les intervalles de temps correspondant aux divers canaux et en comparant ces niveaux à un seuil prédéterminé.

Dans les systèmes de radio mobile du type à accès multiple à répartition en fréquence (en abrégé systèmes AMRF), les canaux de communication sont des canaux fréquentiels multiplexés en fréquence et le récepteur d'une station mobile ne peut recevoir qu'un canal à la fois, de sorte que pour mesurer le niveau dans tous les canaux de la voie descendante ce récepteur doit varier en fréquence par paliers pour explorer successivement tous ces canaux. Par exemple, pour un système à 255 canaux à explorer en 125 mS (période de trame d'un système AMRT comparable), la durée de chaque palier de fréquence doit être de 0,5 mS environ. Pour tenir compte du phénomène d'évanouissement dû aux trajets multiples, il convient de faire une moyenne de la mesure des niveaux dans les canaux sur deux ou trois explorations. Le temps relativement long (2 à 3 fois 125 mS) requis pour la recherche d'un canal libre suivant cette procédure ne présente pas d'inconvénient majeur pendant la période de veille, mais est très gênante si un changement de canal doit être effectué au cours d'une communication par exemple si le canal utilisé devient brouillé ; en effet pendant le temps de recherche de canal libre, la communication doit être interrompue. Pour éviter cet inconvénient, on peut utiliser un récepteur auxiliaire explorant en permanence les canaux pour la recherche d'un second canal libre en prévision du moment où le récepteur principal devra changer de canal ; mais cette solution est complexe.

Enfin, on doit noter que dans la pratique on utilise de plus en plus des systèmes mixtes combinant les accès multiples à répartition en fréquence et à répartition dans le temps et permettant plus aisément que les systèmes de type purement AMRT ou AMRF d'équiper les stations fixes d'un nombre de canaux variable selon les lieux (zône urbaine ou rurale) ou selon le temps pour tenir compte de l'augmentation progressive du nombre des utilisateurs.

Ainsi, on peut constituer un système mixte AMRT/AMRF à capacité variable en multiplexant en fréquence un nombre variable de trames AMRT. On peut distinguer les systèmes AMRT à large bande/AMRF dans lesquels chaque trame AMRT occupe une bande de largeur supérieure à la bande de cohérence d'un canal qui est de l'ordre de 200 KHZ et les systèmes AMRT à bande étroite/AMRF dans lesquels chaque trame AMRT occupe une bande de cohérence d'un canal. Dans les deux cas, les stations fixes peuvent être équipées d'un nombre de canaux variable selon le lieu et selon le temps avec un incrément égal au nombre de canaux de communication contenus dans une trame AMRT. Enfin, on peut également constituer un système à capacité variable avec une variante d'un système mixte AMRT à bande étroite/AMRF dans laquelle sont effectués des sauts de fréquence au rythme des trames AMRT, ces sauts de fréquence étant coordonnés entre les utilisateurs de façon à éviter les brouillages mutuels. Dans un tel système un canal de communication utilise un intervalle de temps des trames AMRT avec une fréquence porteuse variant suivant un code déterminé par la loi de sauts de fréquence utilisée. Ce système mixte est appelé par la suite système AMRT/AMRC/AMRF, AMRC signifiant suivant l'usage "accès multiple à répartition dans les codes".

Il est clair que si l'on veut appliquer le procédé de recherche de canal libre décrit dans la demande de brevet 2 556 532 aux systèmes mixtes envisagés ci-dessus, qui comportent tous un accès multiple à répartition en fréquence, on retrouve les mêmes difficultés que pour les systèmes de type purement AMRF.

La présente invention vise à fournir un procédé évitant ces difficultés en permettant de sélectionner un canal libre et de changer de canal dans n'importe quel système de radio mobile, en particulier les trois systèmes mixtes envisagés, sans aucune interruption pendant les communications.

Conformément à l'invention, un procédé de recherche de canal libre du genre évoqué ci-dessus est caractérisé en ce que toutes les stations fixes transmettent en oûtre en permanence dans les canaux de la voie sémaphore qui leur sont alloués les adresses des canaux duplex qu'elles utilisent et dans la station mobile M est mesuré le niveau reçu dans lesdits canaux de la voie sémaphore et, lorsque le niveau mesuré dans ces canaux dépasse un seuil de gêne, les stations fixes ayant émis dans ces canaux sont dites gênantes, les adresses des canaux duplex occupés dans la voie descendante étant formées dans la station mobile M en prenant parmi les canaux duplex utilisés dont les adresses sont transmises par les canaux de la voie sémaphore ceux utilisés par les stations fixes gênantes.

Pour certaines stations fixes, l'information des canaux duplex utilisés transmises via la voie sémaphore peut être reçue dans les stations mobiles avec un niveau au seuil du niveau de gêne, ce qui peut procurer des erreurs dans la restitution de cette information.

Pour éviter cette difficulté, il est avantageux que le seuil de gêne soit fixé au seuil de bonne réception et que les stations fixes émettent dans les canaux de la voie sémaphore avec un niveau supérieur au niveau dans les canaux de communication d'une quantité substantiellement égale à la différence entre le seuil de bonne réception et ledit deuxième seuil.

La description suivante en regard des dessins annexés, le tout donné à titre d'exemple fera bien comprendre comment l'invention peut être réalisée.

La figure 1 représente les positions relatives de stations fixes et mobiles dans des zônes dites de gêne.

Les figures 2 et 3 représentent des diagrammes temps-fréquence pour illustrer la structure de la voie sémaphore utilisée dans le procédé de l'invention, et la structure de la voie de communication descendante. La figure 2 concerne un système mixte à accès multiple à répartition dans le temps et en fréquence. La figure 3 concerne un système mixte à répartition dans le temps, dans les codes et en fréquence.

La figure 4 représente un schéma du dispositif mettant en oeuvre le procédé de l'invention dans une station mobile.

La figure 5 représente un schéma du dispositif mettant en oeuvre le procédé de l'invention dans une station fixe.

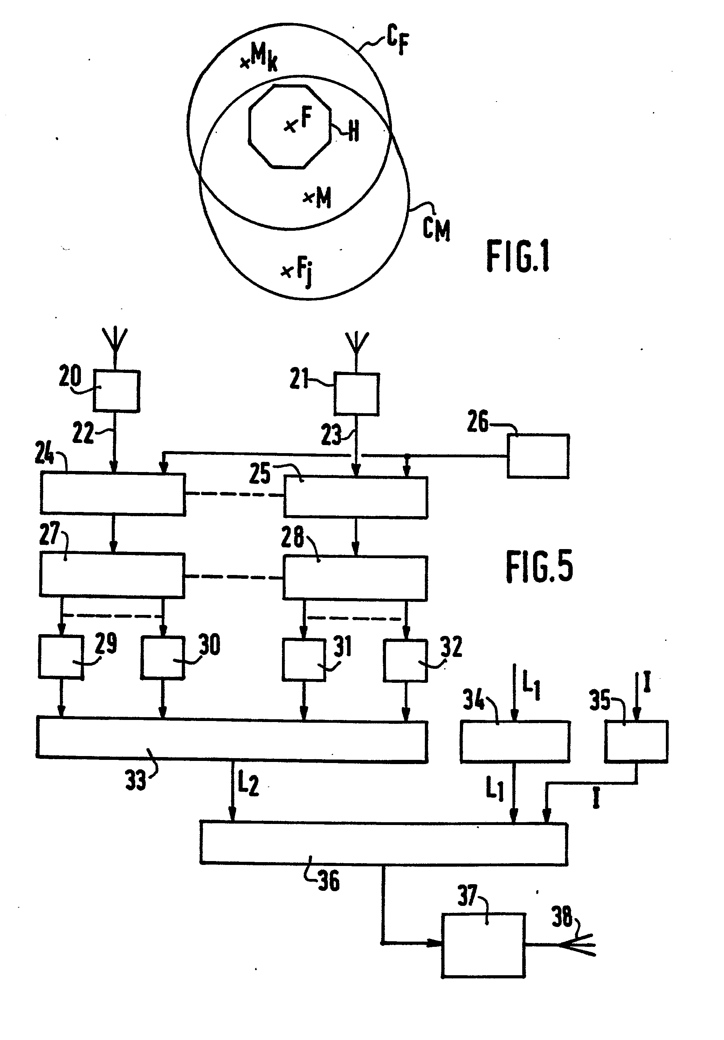

Pour expliquer le procédé de l'invention, on a représenté schématiquement sur la figure 1 les positions relatives de diverses stations fixes et mobiles d'un système de radio mobile à réseau cellulaire. Dans ces systèmes bien connus le territoire à couvrir est divisé en cellules généralement de forme hexagonale, telles que la cellule H, chaque cellule comportant par exemple en son centre une station fixe telle que F. Chaque station fixe peut émettre en direction de mobiles dans des canaux de communication formant une voie descendante. On suppose qu'une communication bidirectionnelle doit être établie entre la station fixe F couvrant en principe une portion de territoire définie par la cellule H et une station mobile M. La station mobile M peut émettre en direction des stations fixes dans des canaux de communication formant une voie montante. Les stations fixes peuvent être équipées pour émettre et recevoir dans l'ensemble des canaux de communication du réseau. Le procédé de l'invention a pour but la recherche d'une paire de canaux libres montant et descendant pour établir une communication bidirectionnelle entre une station fixe F et une station mobile M. Comme pour le procédé décrit dans la demande de brevet précitée, à chaque canal de la voie montante est associé un canal déterminé de la voie descendante pour former un canal de communication duplex qui doit être considéré comme occupé si le canal de la voie montante ou le canal de la voie descendante est occupé. On utilise également les notions de zônes de gêne que l'on va préciser à l'aide de la figure 1.

On peut définir autour d'une station fixe telle que F une zone de gêne $C_F$ à l'intérieur de laquelle toute station mobile telle que $M_R$ est susceptible de gêner une communication entre F et la station mobile M si la puissance de réception dans un canal de la voie montante est supérieure à un premier seuil prédéterminé.

On peut également définir autour d'une station mobile telle que M une zône de gêne $C_M$ à l'intérieur de laquelle toute station fixe telle que $F_j$ est susceptible de gêner une communication entre M et la station fixe F si la puissance de réception dans un canal de la voie descendante est supérieure à un deuxième seuil prédéterminé.

Selon le procédé de recherche de canal libre décrit dans la demande de brevet 2 556 532 , pour l'établissement d'une communication entre les stations F et M, la station fixe F détecte les canaux de la voie montante occupés par des communications avec des mobiles $M_k$ situés dans sa zône de gêne $C_F$. Pour cela, la station fixe F mesure dans tous les canaux de la voie de communication montante le niveau de puissance reçu et compare les niveaux mesurés à un premier seuil prédéterminé, les canaux occupés étant ceux pour lesquels le niveau mesuré est supérieur à ce seuil. Les adresses des canaux duplex occupés dans la voie montante sont alors transmis en direction des stations mobiles par une voie sémaphore formée d'intervalles de temps équidistants, alloués successivement et de façon périodique à toutes les stations fixes d'un motif de cellules à l'aide duquel est constitué le réseau cellulaire.

D'autre part, selon le procédé connu, la station mobile M détermine les canaux de la voie descendante occupés par des communications avec des stations fixes $F_j$ situées dans sa zône de gêne $C_M$ suivant une méthode directe, analogue à celle utilisée dans la station fixe, c'est-à-dire en mesurant dans tous les canaux de la voie de communication descendante le niveau de puissance reçu et en comparant les niveaux mesurés à un second seuil prédéterminé, les canaux occupés étant ceux pour lesquels le niveau mesuré est supérieur à ce seuil. A partir des adresses des canaux duplex occupés dans la voie montante transmis par la voie sémaphore et des adresses des canaux descendants occupés (ou canaux duplex occupés dans la voie descendante) détectés dans la station mobile M, cette dernière peut aisément sélectionner un canal de communication duplex libre ayant une adresse différente de celles de tous ces canaux duplex occupés.

Mais, comme on l'a déjà indiqué, la détection dans la station mobile M des canaux duplex occupés dans la voie descendante par la méthode directe définie ci-dessus, rend le procédé connu difficilement utilisable dans tous les systèmes comportant un accès multiple à répartition en fréquence, systèmes de type purement AMRF ou systèmes mixtes.

Selon la présente invention, la détermination des canaux duplex occupés dans la voie descendante est effectuée d'une façon différente, évitant complètement les difficultés du procédé connu. Cette détermination est basée sur la remarque suivante : à la station mobile M, le niveau du signal reçu est le même pour tous les canaux descendants utilisés par une station fixe, canaux de communication et canal sémaphore.

Par conséquent, pour identifier les canaux de communication duplex occupés dans la voie descendante par des communications avec des stations fixes $F_j$ situés dans la zône de gêne $C_M$, on peut suivant la présente invention, utiliser dans la station mobile M les deux informations suivantes :

- une première information est constituée par la liste des stations voisines $F_j$ gênantes. Cette liste peut être aisément établie dans la station mobile M en mesurant les niveaux et en comparant ces niveaux à un seuil dans les différents canaux de la voie sémaphore, qui supportent des signaux provenant séquentiellement de toutes les stations fixes d'un motif de cellules.

- une deuxième information est la liste de canaux de communication duplex utilisés par toutes les stations $F_j$, en y incluant la station F avec laquelle la communication doit être établie. Cette liste connue évidemment de chaque station fixe peut être diffusée en permanence par la voie sémaphore en direction des stations mobiles.

Les canaux duplex occupés dans la voie descendante peuvent alors être aisément déterminés en prenant parmi les canaux de communication duplex utilisés, fournis par la deuxième information, ceux provenant des stations fixes gênantes, fournis par la première information.

On peut noter que la première information ne nécessite pratiquement dans une station mobile aucun équipement supplémentaire. En effet, le niveau dans les canaux de la voie sémaphore peut être déjà mesuré pour la détermination nécessaire de la station fixe de rattachement qui est la station reçue avec le plus fort niveau et qui est susceptible de changer lors du mouvement du véhicule supportant la station mobile.

Par ailleurs, pour éviter toute erreur de réception de la deuxième information (liste des canaux utilisés) dans une station mobile, qui peut recevoir les canaux de la voie sémaphore avec un niveau au seuil de gêne, il est avantageux d'augmenter d'un nombre fixe et connu de décibels le niveau émis dans les canaux de la voie sémpahore de façon à amener le seuil de gêne au seuil de bonne réception. La différence entre ces deux niveaux est de l'ordre de 15 à 20 dB. En procédant de cette manière, les stations fixes émettent avec deux niveaux de puissance, l'un étant utilisé pour les canaux de communication et l'autre plus élevé étant utilisé pour les canaux de la voie sémaphore.

Finalement, avec le procédé de la présente invention, chaque station fixe émet dans la voie sémaphore :

- à l'usage de toutes les stations mobiles, la liste des canaux de communication duplex qu'elle utilise (pour la détermination des canaux occupés dans la voie descendante, comme on vient de l'expliquer).

- à l'usage des stations mobiles qui lui sont rattachées, la liste des canaux duplex occupés dans la voie montante (comme selon le procédé de la demande de brevet précitée).

Il est clair que ces deux informations émises par chaque station fixe peuvent être combinées pour utiliser un moindre nombre d'éléments binaires.

Une station mobile sélectionne donc un canal duplex libre à l'exception :

- des canaux duplex occupés dans la voie montante, qui gênent sa station de rattachement et dont la liste lui est fournie par cette dernière, par la voie sémaphore.

- des canaux duplex occupés dans la voie descendante, qui sont déterminés selon le procédé de la présente invention.

Ce procédé peut s'appliquer dans les mêmes circonstances que celles décrites dans la demande de brevet N° 2 556 532 :

- lorsque la station mobile M veut appeler un abonné rattaché au réseau ou une autre station mobile, elle sélectionne par mesure des niveaux dans la voie sémaphore la station fixe la mieux reçue, qui devient sa station de rattachement F. Puis, la station mobile M choisit un canal duplex libre pour liaison avec M.

- lorsqu'une station fixe F veut appeler l'une des stations mobiles M situées dans sa zone d'action, elle diffuse par la voie sémaphore le numéro de la station mobile appelée et celle-ci choisit un canal duplex libre par le procédé de l'invention.

- lorsqu'au cours d'une communication entre la station fixe F et la station mobile M, cette dernière vient à se trouver gênée par des signaux provenant d'une autre station fixe $F_j$, la station M recherche un nouveau canal duplex libre par le procédé de l'invention et effectue un changement de canal.

- lorsqu'au cours d'une communication entre la station mobile M et la station fixe F, cette dernière vient à se trouver gênée par des signaux provenant d'une autre station mobile $M_k$, la station fixe F en informe la station mobile M en diffusant à nouveau son numéro par la voie sémaphore et la station mobile M procède alors à une recherche de canal libre et à un changement de canal.

- enfin, lorsqu'au cours d'une communication entre la station fixe F et la station mobile M, cette dernière détecte une station fixe F' qui est mieux reçue que la station F, la station mobile M effectue les mêmes opérations de recherche de canal libre et de changement de canal, avec en plus la transmission aux stations fixes concernées F et F' des informations de service relatives au changement de station.

On va maintenant décrire une structure de voie sémaphore permettant que la recherche de canal libre suivant le procédé de l'invention puisse être effectuée sans interruption de la communication entre une station fixe et une station mobile, quel que soit le type du système de radio mobile.

Il suffit pour cela que la station mobile M reçoive les informations de la voie sémaphore, quel que soit le canal de la voie descendante utilisé lors de la communication avec la station fixe M. Bien entendu, si cette condition est réalisée, la veille dans un mobile pourra être effectuée sur n'importe quel canal de la voie descendante, ce qui offre également l'avantage de rendre le procédé insensible au brouillage d'un canal particulier, lors d'un appel.

La voie sémaphore consiste en des intervalles de temps équidistants alloués successivement et périodiquement à toutes les stations fixes d'un motif de cellules, ces intervalles de temps se produisant simultanément pour toutes les fréquences porteuses utilisables par une station fixe. Bien entendu, tous les intervalles de temps de la voie sémaphore doivent être synchronisés pour toutes les stations fixes d'un système de radio mobile et cette synchronisation doit être récupérée dans les stations mobiles.

Dans un système purement AMRT correspondant au cas particulier d'une seule fréquence porteuse, on retrouve la voie sémaphore décrite dans la demande de brevet 2 556 532. Dans un système purement AMRT, on aurait pour la voie sémaphore autant d'intervalles de temps simultanés que de canaux de communication. Mais comme on l'a déjà indiqué, ce système ne permet pas pratiquement un équipement différent et progressif des stations fixes.

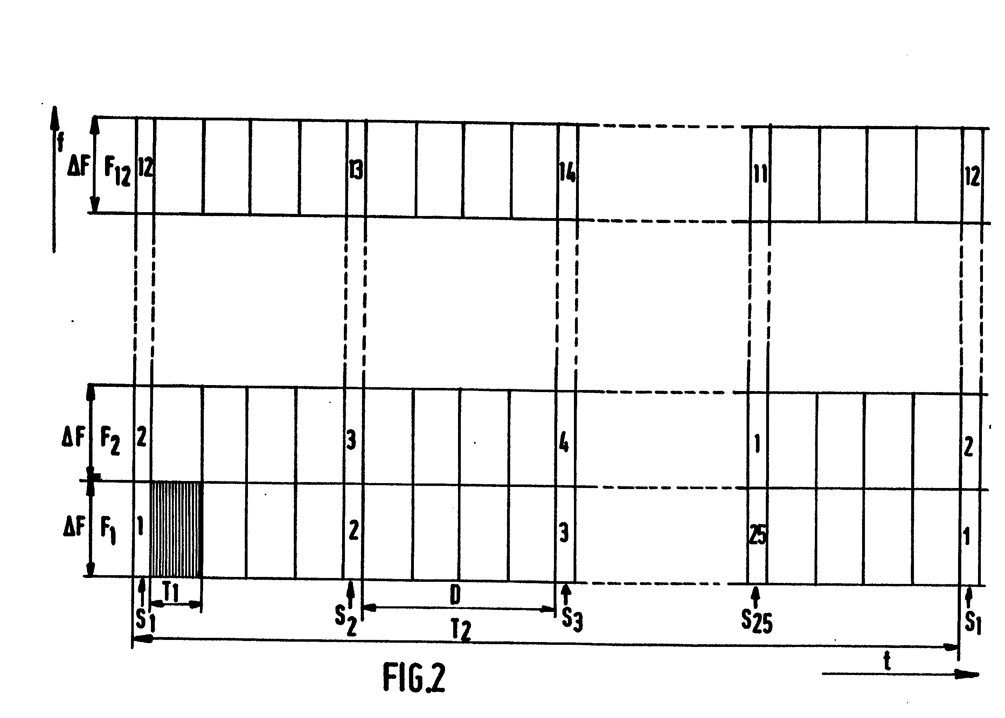

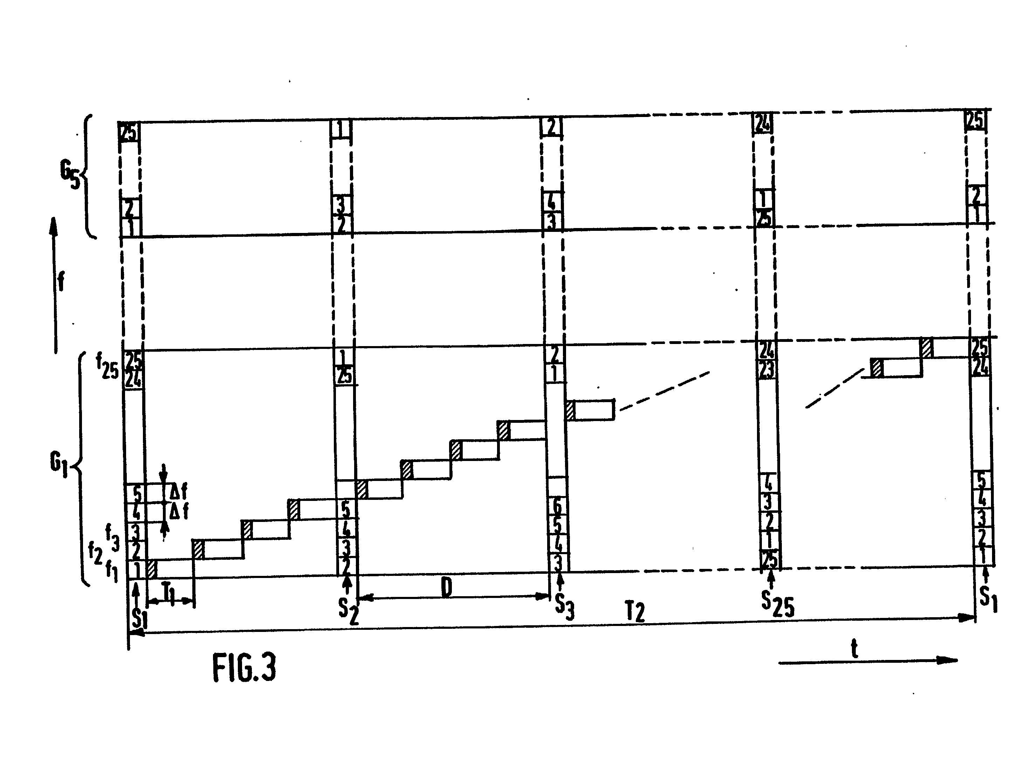

On va maintenant montrer à l'aide des diagrammes des figures 2 et 3 comment on peut organiser la voie sémaphore dans des systèmes mixtes permettant plus facilement d'équiper les stations fixes en fonction des besoins.

La figure 2 représente dans un diagramme temps t - fréquence f la structure de la voie de communication descendante et de la voie sémaphore pour un système AMRT large bande/AMRF. Une station fixe peut être équipée d'un nombre $N_f$ de fréquences porteuses, allant jusqu'à une valeur maximale $N_{fm}$ et servant chacune à transmettre des trames AMRT de période $T_1$. Une trame AMRT comporte x canaux temporels et occupe une bande de largeur $\Delta F$. Les bandes $\Delta F$ sont jointives pour l'ensemble des fréquences porteuses.

Dans l'exemple représenté, le nombre maximal de fréquences porteuses est $N_{fm}$ = 12, la largeur de bande $\Delta F$ est de 2 MHZ de sorte que la bande maximale occupée par la voie de communication descendante est 24 MHZ. Une trame AMRT comporte n = 60 canaux temporels de largeur 0,5 mS de sorte qu'une trame AMRT a une période $T_1$ = 0,5 mS x 60 = 30 mS.

La voie sémaphore est constituée à l'aide des intervalles de temps marqués S avec un indice indiquant le numéro des intervalles de temps dans une période $T_2$ de trame sémaphore. Tous les intervalles de temps S se produisent au même instant pour toutes les fréquences porteuses $F_1$ à $F_{12}$ et sont séparés par une durée D qui est produit par un entier N de la période $T_1$ de trame AMRT. Dans l'exemple choisi N = 4. Dans une période $T_2$ de trame sémaphore, on trouve un nombre d'intervalles de temps S égal à la taille $C_h$ du motif choisi (nombre de cellules du motif) de façon que toutes les stations fixes du motif puissent émettre successivement au cours d'une période $T_2$. Dans l'exemple choisi sur la figure 2 $C_h$ = 25 et les intervalles de temps S représentés sont $S_1$ , $S_2$, $S_3$....$S_{25}$. Si l'intervalle de temps S du canal sémaphore a la même durée 0,5 mS que celle d'un canal de communication, la période de la trame sémaphore est

$$T_2 = 0,5 \text{ mS} \times Ch (N.n + 1) = 0,5 \text{ mS} \times 25 (240 + 1) = 3,0125 \text{ S}.$$

Les stations fixes émettent par permutation circulaire à la fois en temps et en fréquence. Ainsi, comme on l'a représenté dans l'exemple de la figure 2 par des nombres dans les cases correspondant aux intervalles de temps S et aux fréquences porteuses, pour la fréquence porteuse $F_1$ les intervalles de temps successifs $S_1$, $S_2 S_3$,....$S_{25}$ servent respectivement à l'émission des stations fixes N° 1, 2, 3...25 ; pour la fréquence porteuse $F_2$, les intervalles de temps $S_1$, $S_2$, $S_3$..$S_{25}$ servent à l'émission des stations fixes N° 2,3, 4....1 ; et ainsi de suite jusqu'à la fréquence porteuse $F_{12}$ pour laquelle les intervalles de temps $S_1$, $S_2$, $S_3$.... $S_{25}$ servent à l'émission des stations fixes 12, 13, 14....11. A n'importe quel intervalle de temps $S_1$ à $S_{25}$ de la voie sémaphore, toutes les stations fixes d'un motif émettent dans cette voie sémaphore. Bien entendu, on pourrait utiliser un autre exemple de permutation circulaire, pouvu que toutes les stations fixes émettent dans les $C_h$ intervalles de temps S d'une période de trame sémaphore. La condition pour que ceci soit réalisé est que la différence entre les numéros des stations fixes émettant successivement soit un nombre premier avec la taille $C_h$ du motif. Dans l'exemple de $C_h$ = 25, on peut choisir pour cette différence le nombre 4. Pour la fréquence porteuse $F_1$, on aurait alors successivement pour les intervalles $S_1$ à $S_{25}$ l'émission des stations fixes N° 1, 5, 9, 13, 17, 21, 25, 4, 8, 12, 16, 20, 24, 3, 7, 11, 15, 19, 23, 2, 6, 10, 14, 18, 22. Pour la fréquence porteuse $F_2$, on aurait successivement l'émission des stations fixes N° 5 à 1, suivant l'ordre ci-dessus. Enfin pour la fréquence porteuse $F_{12}$, on aurait successivement l'émission des stations fixes N° 20 à 16 suivant l'ordre ci-dessus.

Avec la structure de la voie sémaphore que l'on vient de décrire, il est clair que sur n'importe quel canal de communication (avec une fréquence porteuse quelconque) que se trouve une station mobile en veille ou en communication avec une station fixe, cette station mobile reçoit par la voie sémaphore toutes les informations des stations fixes d'un motif lui permettant la recherche d'un canal libre. D'autre part, les stations fixes peuvent être équipées d'un nombre $N_f$ de fréquences porteuses variable, jusqu'à une valeur maximale $N_{fm}$, suivant les besoins requis dans le temps et dans l'espace : dans l'exemple de la figure 2, $N_{fm} = 12$. Quelles que soient les fréquences porteuses utilisées, une station mobile recevra toujours par la voie sémaphore les informations nécessaires à la recherche d'un canal libre.

Un système AMRT bande étroite/ AMRT ne nécessite pas une description particulière. Par rapport au système de la figure 2, on a simplement une bande $\Delta$ F plus étroite, par exemple 200 KHZ, pour la trame des canaux AMRT, cette trame comportant un nombre plus faible de canaux temporels, par exemple 6 canaux. Le nombre maximal de fréquences porteuses peut être plus élevé, de façon à obtenir au total le même nombre de canaux de communication. La structure du canal sémaphore peut être la même que celle de la figure 2, avec la même distance D entre les intervalles S de la voie sémaphore et la même période $T_2$ de la voie sémaphore.

On va plutôt décrire à l'aide du diagramme temps-fréquence de la figure 3, un système AMRT bande étroite/AMRC/AMRF. Dans un tel système chaque canal de communication qu'utilise un intervalle de temps d'une trame AMRT n'est pas supporté par une fréquence porteuse fixe, mais par une fréquence porteuse variant par sauts suivant une loi déterminée.

Dans un système comme celui de la figure 3, chaque station fixe doit être équipée d'un nombre $N_f$ de fréquences porteuses multiple de la taille $C_h$ du motif choisi : $N_f = KC_h$, K entier déterminant le nombre de groupes dans lesquels sont réparties les fréquences porteuses. Dans l'exemple de la figure 3, celles-ci sont réparties en 5 groupes G 1 à G5 comportant chacun 25 fréquences porteuses, le nombre maximal $N_{fm}$ de fréquences porteuses étant ainsi de 125. La largeur de bande utilisée autour de chaque fréquence porteuse pour transmettre la trame AMRT est $\Delta$ f = 0,2 MHZ. Ces bandes $\Delta$ f sont jointives pour l'ensemble des fréquences porteuses de sorte que la bande maximale occupée par la voie de communication descendante est de 0,2 MHZ x 25 x 5 = 25 MHZ.

Le fonctionnement du système est analogue pour chacun des groupes de fréquences porteuses G1 à G5 et l'on décrit plus particulièrement la structure des canaux de communication et de la voie sémaphore pour le groupe G1.

Une trame AMRT comporte 6 intervalles de temps de durée 5mS de sorte qu'une trame AMRT à une période $T_1 = 5 \times 6 = 30$mS. Chaque canal de communication est constitué par un intervalle de temps de la trame AMRT supporté par une fréquence porteuse variant par sauts suivant une loi déterminée, l'intervalle de temps entre deux sauts successifs étant la période $T_1$ de la trame AMRT. Sur le diagramme de la figure 3, on a représenté par des cases hachurées, l'espace temps-fréquence occupé par un canal de communication utilisant un intervalle de temps et une loi de sauts de fréquence. Dans l'exemple représenté, les fréquences porteuses utilisées par ce canal croissent, au cours d'une période de la loi de sauts de fréquence, dans l'ordre allant de $f_1$ à $f_{25}$. Bien entendu, un autre ordre pourrait être utilisé ; pourvu que les 25 fréquences porteuses soient utilisées dans cette période. Pour le groupe $G_1$ de 25 fréquences porteuses, 25 lois de sauts de fréquence sont possibles, ces lois étant obtenues par des décalages temporels multiples de la période $T_1$ de la trame AMRT. Ainsi, l'utilisation dans une station fixe d'un groupe de fréquences porteuses tel que $G_1$ permet d'obtenir G x 25 = 150 canaux de communication. En juxtaposant 5 groupes de fréquences porteuses fonctionnant comme $G_1$ on peut obtenir 5 x 150 = 750 canaux de communication.

La voie sémaphore est constituée de façon analogue à celle représentée sur la figure 2, à l'aide d'intervalles de temps S équidistants, au nombre de $C_h$ = 25 dans une période de $T_2$ de trame sémaphore. Ces intervalles de temps repérés $S_1$ à $S_{25}$ dans une période $T_2$ se produisent aux mêmes instants pour toutes les fréquences porteuses des 5 groupes de fréquence $G_1$ à $G_5$. Ces intervalles de temps S de la voie sémaphore sont séparés par une durée D qui est le produit par un entier N de la période $T_1$ de trame AMRT. Les $C_h$ stations fixes d'un motif de cellules peuvent émettre successivement dans les $C_h$ intervalles de temps S de la trame sémaphore si N est un nombre premier avec $C_h$ , ce qui est réalisé dans l'exemple de la figure 3 avec $C_h$ = 25 et N = 4. Si l'intervalle de temps S du canal sémaphore a la même durée 5mS que celui d'un canal de communication, la période de la trame sémaphore a la durée $T_2 = 5$mS x $C_h(Nn+1) = 5$mS x 25(24 + 1) = 3,125 S.

Les stations fixes émettent dans la voie sémaphore, par permutation circulaire à la fois en temps et en fréquence. Dans l'exemple de la figure 3 où les fréquences porteuses du groupe $G_1$ sont utilisées dans les lois de sauts de fréquences dans l'ordre de $f_1$ à $f_{25}$ ; on voit que pour la fréquence porteuse $f_1$ les intervalles de temps $S_1$ à $S_{25}$ servent à l'émission des stations fixes N° 1 à 25 ; pour la fréquence porteuse $f_2$, les intervalles de temps $S_1$ à $S_{25}$ servent à l'émission des stations fixes N° 2 à 1 ; et ainsi de suite jusqu'à la fréquence porteuse $f_{25}$ pour laquelle les intervalles de temps $S_1$ à $S_{25}$ servent à l'émission des stations fixes N° 25 à 24.

Avec cette structure de voie sémaphore, si les stations fixes sont équipées du groupe de fréquences porteuses $G_1$, une station mobile en veille ou en communication avec une station fixe sur un canal de communication quelconque utilisant l'une des 25 lois de sauts de fréquence possibles, reçoit forcément par la voie sémaphore les informations de toutes les stations fixes d'un motif, lui permettant la recherche d'un canal libre pour établir une communication ou changer de canal.

Si les stations fixes sont équipées de plusieurs des groupes de fréquences porteuses $G_1$ à $G_5$, chaque groupe de $C_h$ fréquences porteuses ($C_h = 25$), peut utiliser des lois de sauts de fréquences indépendantes et analogues à celles décrites pour le groupe $G_1$ ; de même la structure de la voie sémaphore peut être pour chaque groupe analogue à celle décrite pour le groupe $G_1$. Dans ces conditions, toute station mobile en veille ou en communication sur un canal de communication déterminé, l'un des groupes $G_1$ à $G_5$ reçoit forcément par la voie sémaphore toutes les informations lui permettant la recherche d'un canal libre.

Les messages sémaphore émis par les stations fixes dans toutes les fréquences porteuses qu'elles utilisent ($N_{fm}$ fréquences porteuses au maximum),ont un contenu identique qui est le suivant :
- l'adresse de la station fixe expéditrice du message,
- les informations de service relatives aux appels, à savoir le numéro du ou des abonnés mobiles demandés et la nature de l'appel (appel, retour d'appel, accusé de réception, fin de communication, commande de changement de canal, etc...)
- pour la recherche de canal libre selon le procédé de l'invention
* la liste $L_1$ des canaux duplex utilisés par la station fixe,
* la liste $L_2$ des canaux duplex reconnus comme occupés par la station fixe, à l'aide de mesures de niveau dans les canaux de la voie montante.
- en outre, un message sémaphore indique :
* dans un système AMRT large bande/AMRF, la ou les fréquences porteuses $N_f$ équipant la station fixe et de préférence une seule fréquence porteuse sélectionnée par la station fixe et à utiliser par la station mobile pour le choix d'un canal de communication,
* dans un système AMRT bande étroite/AMRC/AMRT, le ou les groupes de fréquences porteuses équipant la station fixe (c'est-à-dire la ou les valeurs de K dans $N_f = KC_h$) et de préférence un seul groupe sélectionné par la station fixe et à utiliser par la station mobile pour le choix d'un canal de communication.

En transmettant les deux dernières informations, une station fixe peut ainsi orienter à tout moment le choix du canal libre par les stations mobiles vers la fréquence porteuse la moins chargée en canaux occupés ou vers le groupe de fréquences porteuses le moins chargé. Par exemple, quand une fréquence porteuse (ou un groupe de fréquences porteuses) équipe une station fixe, mais pas ses voisines. Cette station fixe orientera le choix des stations mobiles vers cette fréquence ou ce groupe de fréquences. Par ailleurs, si dans un message plusieurs demandes d'appel sont émises par la station fixe, celle-ci indique dans les messages sémaphore correspondants une fréquence porteuse ou un groupe de fréquences porteuses différent pour chaque station mobile. Ainsi, on évite le risque de voir plusieurs stations mobiles appelées choisir le même canal au même moment.

En oûtre, en transmettant les deux dernières informations, la station fixe peut limiter les canaux des listes $L_1$ et $L_2$, à ceux faisant partie de la fréquence porteuse ou du groupe de fréquences porteuses choisi, ce qui diminue le nombre de bits du message sémaphore.

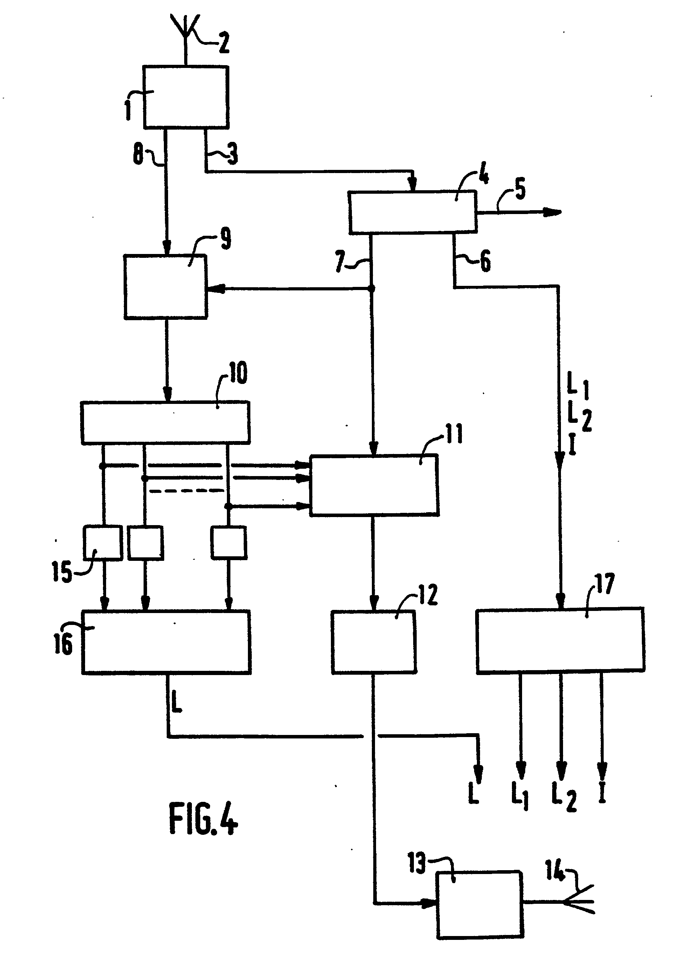

La mise en oeuvre du procédé de l'invention peut être effectuée dans une station mobile suivant le schéma de la figure 4. Ce schéma n'indique que les organes principaux, concernés par le procédé.

Selon la figure 4, une station mobile comporte un récepteur radio 1 connecté à une antenne réceptrice 2. La sortie 3 du récepteur fournit le signal de sortie démodulé qui est appliqué à un décodeur 4. Ce dernier fournit sur sa sortie 5 le signal décodé de données ou de parole transmis vers le récepteur sur le canal de communication choisi. La sortie G du décodeur fournit les informations reçues dans la voie sémaphore et concernant la recherche de canal libre. Enfin, en supposant incorporés dans le décodeur, des dispositifs de synchro bit et de synchrotrame la sortie 7 du décodeur fournit le signal de synchro trame de la voie sémaphore (trame à $C_h$ intervalles de temps successifs déterminant les $C_h$ canaux de la voie sémaphore). Le récepteur radio 1 comporte d'autre part une sortie basse fréquence auxiliaire 8, située avant le limiteur du récepteur et permettant ainsi une mesure du niveau de réception. Le signal sur cette sortie 8 est appliqué à un dispositif de mesure de niveau 9 qui reçoit par ailleurs le signal de synchro trame de la voie sémaphore et qui fournit ainsi le niveau mesuré dans les $C_h$ canaux de la voie sémaphore. Les niveaux mesurés sortant du dispositif 9 sont aiguillés dans le dispositif 10 sur $C_h$ filtres passe bas fournissant chacun une moyenne du niveau mesuré sur plusieurs périodes de trame sémaphore afin d'éviter les anomalies possibles dans les mesures de niveau. Aux $C_h$ sorties du dispositif 10, on obtient ainsi le niveau dans les $C_h$ canaux de la voie sémaphore en provenance des $C_h$ stations fixes d'un motif de cellules. Les niveaux fournis par le dispositif 10 sont comparés entre eux dans le circuit comparateur 11, aux instants caractéristiques S du signal de synchro trame. Le circuit comparateur 11 détermine le niveau le plus élevé et la position du canal correspondant dans la trame sémaphore, cette position fournissant l'adresse de la station fixe de rattachement qui est stockée dans la mémoire 12. Cette adresse est fournie à l'émetteur radio 13 pour être diffusée via l'antenne d'émission14. L'émetteur 14 reçoit bien entendu d'autres signaux à diffuser (messages de procédures, signaux de phonie ou de données) qui n'ont pas été représentés pour simplifier.

Pour mettre en oeuvre le procédé de l'invention, les $C_h$ niveaux mesurés fournis par le dispositif 10 sont appliqués à $C_h$ circuits à seuil, tels que 15. Le seuil commun de ces circuits est le seuil dit de gêne. Si le niveau reçu dans un canal dépasse ce seuil de gêne, la station fixe ayant émis dans ce canal est dite gênante. La liste L des adresses des stations fixes gênantes ayant déterminé un dépassement du seuil de gêne sont stockées dans la mémoire 16 à $C_h$ bits.

Par ailleurs, la sortie 6 du décodeur 4 fournit les informations reçues dans les différents canaux de la voie sémaphore , à savoir pour chaque canal sémaphore, la liste $L_1$ des canaux de communication utilisés par la station fixe émettant dans le canal sémaphore, la liste $L_2$ des canaux reconnus comme occupés par cette station fixe, enfin l'information I indiquant la ou les fréquences porteuses (le ou les groupes de fréquences porteuses) à utiliser pour la recherche de canal libre. Ces informations reçues dans la voie sémaphore sont stockées dans la mémoire 17.

La liste L des stations fixes gênantes stockée dans la mémoire 16 d'une part et les listes $L_1$, $L_2$ et l'information I stockées dans la mémoire 17 d'autre part, sont lues dans ces mémoires lors d'un appel ou d'une circonstance nécessitant un changement de canal. A partir de L, $L_1$, $L_2$, I, un canal duplex libre peut être aisément choisi, à l'aide d'un procédé de l'invention décrit plus haut. En bref, un canal duplex libre sélectionné :

- doit appartenir aux canaux déterminés par l'information I,
- ne doit pas appartenir à la liste $L_2$ des canaux occupés dans la voie montante,
- ne doit pas appartenir à la liste $L_1$ des canaux utilisés et provenant des stations fixes gênantes de la liste L.

Les moyens destinés à mettre en oeuvre le procédé de l'invention dans une station fixe sont représentés sur la figure 5. Si la station fixe est équipée pour $N_f$ fréquences porteuses, elle comporte $N_f$ récepteurs radio à fréquence fixe, tels que 20 et 21, muni d'antennes réception et ayant comme le récepteur 1 de la station mobile de la figure 4, une sortie basse fréquence auxiliaire située avant le limiteur de récepteur. Les signaux à ces sorties basse fréquence 22, 23 sont appliqués aux dispositifs de mesure de niveau 24, 25 qui reçoivent par ailleurs d'un générateur 26 le signal de synchro trame des canaux de communication AMRT (trame à n intervalles de temps successifs). Chacun des dispositifs de mesure de niveau 24, 25 fournit ainsi le niveau mesuré dans les n canaux de la voie de communication montante. Les niveaux mesurés, fournis par 24, 25 sont aiguillés dans chacun des dispositifs 27, 28 vers n filtres passe bas. Ainsi, on obtient à la sortie de l'ensemble des dispositifs tels que 27, 28, les niveaux mesurés dans les $nN_f$ canaux de la voie de communication montante. Ces niveaux mesurés sont appliqués à $nN_f$ circuits à seuil réglés tels que 29, 30 et 31, 32. Tous ces circuits sont réglés sur le même seuil (appelé plus haut, premier seuil) et les canaux pour lesquels ce seuil est dépassé sont reconnus comme occupés. L'information des dépassements est appliquée à la mémoire 33 à $nN_f$ bits et lorsque celle-ci est lue, elle fournit la liste $L_2$ des canaux reconnus comme occupés par la station fixe. Par ailleurs, la liste $L_1$ des canaux utilisés par la station fixe est fournie à la mémoire 34. Enfin, l'information I de la ou les fréquences porteuses (du groupe ou des groupes de fréquences porteuses) à utiliser pour la recherche de canal libre est fournie à la mémoire 35. Le message à transmettre dans la voie sémaphore et comportant les listes $L_1$, $L_2$ et l'information I est formé en 36, pour être appliqué à l'émetteur 37, en vue d'être diffusé par l'antenne 38.

**Revendications**

1. Procédé de recherche de canal libre pour un système de radio mobile à réseau cellulaire dans lequel chaque canal de la voie de communication montante est associé à un canal déterminé de la voie de communication descendante pour former un canal duplex assurant la communication entre l'une quelconque des stations fixes et l'une quelconque des stations mobiles,procédé selon lequel, pour la recherche d'un canal duplex libre entre une station fixe F et une station mobile M,

- dans la station fixe F sont détectés les canaux duplex occupés dans la voie montante pour lesquels le niveau de puissance reçu est supérieur à un premier seuil déterminé et les adresses desdits canaux occupés sont transmis par l'un des canaux d'une voie sémaphore formée d'intervalles de temps équidistants alloués successivement et de façon périodique à toutes les stations fixes constituant le réseau cellulaire,

- dans la station mobile M doivent être déterminées les adresses des canaux duplex occupés dans la voie descendante pour lesquels le niveau de puissance reçu est supérieur à un deuxième seuil déterminé, un canal duplex libre étant choisi parmi ceux ayant une adresse différente de celles des canaux occupés transmis par la voie sémaphore et des canaux occupés à déterminer dans la station mobile M, caractérisé en ce que toutes les stations fixes transmettent en oûtre en permanence dans les canaux de la voie sémaphore qui leur sont alloués les adresses des canaux duplex qu'elles utilisent et dans la station mobile M est mesuré le niveau reçu dans lesdits canaux de la voie sémaphore et, lorsque le niveau mesuré dans ces canaux dépasse un seuil de gêne, les stations fixes ayant émis dans ces canaux sont dites gênantes, les adresses des canaux duplex occupés dans la voie descendante étant formées dans la station mobile M en prenant parmi les canaux duplex utilisés dont les adresses sont transmises par les canaux de la voie sémaphore ceux utilisés par les stations fixes gênantes.

2. Procédé selon la revendication 1, caractérisé en ce que ledit seuil de gêne est fixé au seuil de bonne réception et les stations fixes émettent dans les canaux de la voie sémaphore avec un niveau supérieur au niveau dans les canaux de communication d'une quantité substantiellement égale à la différence entre le seuil de bonne réception et ledit deuxième seuil.

3. Procédé selon l'une des revendications 1 et 2, caractérisé en ce que les intervalles de temps déterminant les canaux de la voie sémaphore se produisent simultanément pour toutes les fréquences porteuses utilisables par les stations fixes.

4. Procédé selon la revendication 3, utilisé dans un système de radio mobile du type AMRT (Accès Multiple à Répartition dans le Temps) / AMRF (Accès multiple à Répartition dans les Fréquences), système dans lequel chaque station fixe peut être équipée d'un nombre variable de fréquences porteuses et chaque fréquence porteuse sert à transmettre des trames AMRT comportant n canaux temporels de communication multiplexés dans le temps, procédé caractérisé en ce que les intervalles de temps déterminant les canaux de la voie sémaphore sont séparés par une durée multiple de la période de trame AMRT et dans la période de trame sémaphore le nombre des intervalles de temps déterminant les canaux de la voie sémaphore est égal à la taille $C_h$ du motif de cellules, les stations fixes d'un motif émettant par permutation circulaire dans les intervalles de temps déterminant les canaux de la voie sémaphore et dans l'ensemble des fréquences porteuses.

5. Procédé selon la revendication 4, caractérisé en ce que pour la recherche d'un canal duplex libre pour la communication entre un station fixe F et la station mobile M, la station fixe F transmet en oûtre par le canal de la voie sémaphore qui lui est alloué l'information sur la ou les fréquences porteuses à utiliser dans la station mobile M pour la recherche d'un canal libre.

6. Procédé selon la revendication 3, utilisé dans un système de radio mobile du type AMRT/AMRC (accès multiple à répartition dans les codes)/ AMRF, système dans lequel chaque station fixe peut être équipée d'un nombre variable de fréquences porteuses et les trames AMRT comportant n canaux temporels de communication multiplexés dans le temps sont supportées par une fréquence porteuse variant par sauts suivant des lois déterminées, caractérisé en ce que le nombre de fréquences porteuses est un multiple de la taille $C_h$ du motif de cellules et les fréquences porteuses sont réparties en K groupes (K entier), les intervalles de temps déterminant les canaux de la voie sémaphore étant séparés par une durée D multiple par N de la période de trame AMRT (N entier étant premier avec $C_h$), les stations fixes d'un motif de cellules émettant par permutation circulaire dans les intervalles de temps déterminant les canaux de la voie sémaphore et dans l'ensemble des fréquences porteuses de chaque groupe de fréquences porteuses.

7. Procédé selon la revendication 6, caractérisé en ce que, pour la recherche d'un canal duplex libre pour la communication entre la station fixe F et la station mobile M, la station fixe F transmet en oûtre par le canal de la voie sémaphore qui lui est alloué l'information sur le groupe ou les groupes de fréquences porteuses à utiliser pour la recherche d'un canal libre.

8. Dispositif utilisé dans une station mobile pour mettre en œuvre le procédé selon l'une des revendications 1 à 7, dispositif comportant un récepteur (1) pour recevoir au moins, d'une part, des informations provenant des canaux de communication et d'autre part, des informations provenant de canaux de la voie sémaphore, un organe de réception (4, 17) connecté au canal sémaphore pour fournir la liste $L_2$ des canaux occupés provenant d'une station fixe, caractérisé en ce qu'il comporte des organes de mesure (10, 15, 16) de niveaux de signaux transmis par les canaux de la voie sémaphore pour déterminer la liste L des stations fixes Fi de la zone de gêne, en ce que l'organe de réception est prévu pour fournir, en outre, la liste $L_1$ des canaux utilisés par la station fixe et en ce qu'il comporte un organe de sélection de canal libre opérant à partir desdites listes.

9. Dispositif utilisé dans une station fixe pour mettre en œuvre le procédé selon l'une des revendications 1 à 7, dispositif comportant un récepteur (20) associé à des moyens (24) de mesure de niveau, un organe d'affectation d'occupation (3) pour déterminer en fonction de la mesure de niveau l'état d'occupation des canaux de la voie montante, un émetteur (20) pour émettre en direction des stations mobiles au moyen d'une voie sémaphore les adresses des canaux duplex occupés dans la voie montante, caractérisé en ce que l'émetteur (20) est prévu pour émettre au moyen de la voie sémaphore la liste des canaux de communication utilisée par elle-même (F) et ceux des stations fixes (Fi) de la zone de gêne.

## Claims

1. A method of detecting a free channel in a cellular mobile radio system where each channel in the rising communications path is associated with a given channel in the descending communications path so as to form a duplex channel ensuring communication between any one of the fixed stations and any one of the mobile stations, according to which method, in order to detect a free duplex channel between a fixed station F and a mobile station M:
   - in fixed station F the engaged duplex channels in the rising path for which the received power level is higher than a first given threshold are detected and the addresses of said engaged channels are transmitted over one of the channels of a signalling path formed by equidistant time intervals successively and periodically allocated to all the fixed stations in a pattern of cells constituting the cellular system;
   - the addresses of the engaged duplex channels in the descending path are to be determined for which the received power level in the mobile station M is higher than a second given threshold, a free duplex channel being selected from channels having an address different from those of the engaged channels transmitted over the signalling path and of the engaged channels to be determined in mobile station M,

IN WHICH all the fixed stations also continuously transmit, in the signalling path channels allocated to them, the addresses of the duplex channels which they use while, in mobile station M the level received in said signalling path channels is measured and, when this level measured in these channels exceeds an interference threshold, the fixed stations which have transmitted over these channels are termed interfering, while the addresses of the engaged duplex channels in the descending path are formed in mobile station M by taking from the duplex channels used whose addresses are transmitted over the signalling path channels those used by the interfering fixed stations.

2. A method as claimed in Claim 1, IN WHICH said interference threshold is set at the threshold of good reception and the fixed stations transmit into the signalling path channels at a level higher than that in the communication channels by a quantity substantially equal to the difference between the threshold of good reception and said second threshold.

3. A method as claimed in one of Claims 1 and 2, IN WHICH the time intervals determining the channels of the signalling path are simultaneously produced for all the carrier frequencies usable by the fixed stations.

4. A method as claimed in Claim 3, used in a mobile radio system of the TDMA (time-division multiple access)/FDMA (frequency-distribution multiple access) type, where each fixed station may be fitted with a variable number of carrier frequencies and each carrier frequency is used to transmit TDMA frames comprising n time-division time-multiplexed communication channels, IN WHICH the time intervals determining the channels of the signalling path are separated by a duration which is a multiple of the TDMA frame and, in the period of the signalling frame, the number of time intervals determining the channels of the signalling path is equal to the size $C_h$ of the pattern of cells, the fixed stations in a pattern transmitting by circular permutation in the time intervals determining the channels of the signalling path and in all the carrier frequencies.

5. A method as claimed in Claim 4, IN WHICH, to detect a free duplex channel for communication between the fixed station F and the mobile station M, fixed station F also transmits via the signalling path allocated to it information on the carrier frequency(ies) to be used in the mobile station M to detect a free channel.

6. A method as claimed in Claim 3, used in a mobile radio system of the TDMA/CDMA (code-division multiple access)/FDMA type, where each fixed station may be fitted with a variable number of carrier frequencies and the TDMA frames comprising n time-division time-multiplexed communication channels are supported by a carrier frequency varying in jumps according to determined laws, IN WHICH the number of carrier frequencies is a multiple of the size $C_h$ of the cell pattern and the carrier frequencies are divided into K groups, where K is a whole number, the time intervals determining the channels of the signalling path being separated by a duration D which is a multiple N of the TDMA frame (where N is a whole number and first with Ch), the fixed stations of a cell pattern transmitting by circular permutation in the time intervals determining the channels of the signalling path and in all the carrier frequencies of each group thereof.

7. A method as claimed in Claim 6, IN WHICH, to detect a free duplex channel for communication between the fixed station F and the mobile station M, fixed station F also transmits over the channel of the signalling path allocated to it information on the group(s) of carrier frequencies to be used in detecting a free channel.

8. Apparatus used in a mobile station to implement the method as claimed in one of the Claims 1 to 7, the apparatus comprising a receiver (1) for receiving at least information signals coming from communication channel and also information signals coming from signalling path channels, a receive unit (4, 17) connected to the signalling path channel for producing the list $L_2$ of the engaged channels from a fixed station, characterised in that it comprises measuring units (10, 15, 16) to measure levels of signals transmitted over the signalling path channels for determining the list L of the fixed stations Fi of the interference range, in that the receive unit is provided in order to produce also the list $L_1$ of the channels used by the fixed station and in that it includes a selection unit for selecting the free channel operating on the basis of said lists.

9. Apparatus used in a fixed station for implementing the method as claimed in one of the Claims 1 to 7, this apparatus comprising a receiver (20) connected to level measuring means (24), a unit for assigning the engaged state (3) to determine, in response to the measured level, the engaged state of the channels in the rising path, a transmitter (20) for transmitting in the direction of the mobile stations over a signalling path channel the addresses of the engaged duplex channels in the rising path, characterised in that the transmitter (20) is provided to transmit over the signalling path the list of the communications channels used by itself (F) and those of the fixed stations (Fi) of the interference range.

**Patentansprüche**

1. Verfahren zum Suchen eines freien Kanals für ein zellulares Mobilfunksystem, wobei jeder Kanal in der ankommenden Übertragungsstrecke einem bestimmten Kanal in der ausgehenden Übertragungsstrecke zugeordnet ist, zum Bilden eines Duplexkanals, wodurch Kommunikation zwischen jeder der Feststationen und jeder der Mobilfunkstationen möglich ist, wobei nach diesem Verfahren, zum Suchen eines freien Duplexkanals zwischen einer Feststation F und einer Mobilstation M:

– in der Feststation F diejenigen belegten Duplexkanäle in der ankommenden Strecke detektiert werden, für die der empfangene Leistungspegel höher ist als eine erste bestimmte Schwelle und die Adressen der genannten belegten Kanäle durch einen der Kanäle einer Semaphorstrecke übertragen werden, wobei diese Strecke durch aufeinanderfolgende, allen Feststationen in einem das zellulare System bildende Muster von Zellen zugeordnete, äquidistante Zeitintervalle gebildet wird;

– in der Mobilstation M diejenigen Adressen der belegten Duplexkanäle in der ausgehenden Strecke bestimmt werden müssen, für die der empfangene Leistungspegel höher ist als eine bestimmte zweite Schwelle, wobei ein freier Duplexkanal gewählt wird aus denjenigen, deren Adresse anders ist als diejenigen der über die Semaphorstrecke übertragenen belegten Kanäle und der in der Mobilstation M zu bestimmenden belegten Kanäle, dadurch gekennzeichnet, daß alle Feststationen ebenfalls kontinuierlich in den ihnen zugeordneten Kanälen der Semaphorstrecke die Adressen der verwendeten Duplexkanäle übertragen und in der Mobilstation M der in den genannten Semaphorstreckenkanälen empfangene Pegel gemessen wird und wenn der in diesen Kanälen gemessene Pegel eine Interferenzschwelle überschreitet, die in diesen Kanälen übertragenen Feststationen als störend bezeichnet werden, wobei die Adressen der belegten Duplexkanäle in der ausgehenden Strecke in der Mobilstation M dadurch gebildet werden, daß aus denjenigen verwendeten Duplexkanälen, deren Adressen über die Semaphorstreckenkanäle übertragen sind, diejenigen genommen werden, die durch die störenden Feststationen verwendet worden sind.

2. Verfahren nach Anspruch 1, dadurch gekennzeichnet, daß die Interferenzschwelle festgestellt ist auf der Schwelle für guten Empfang und die Feststationen in den Kanälen der Semaphorstrecke mit einem höheren Pegel übertragen als der Pegel in den Übertragungskanälen, und zwar um einen der Differenz zwischen der Schwelle für guten Empfang und der zweiten Schwelle entsprechenden Betrag höher.

3. Verfahren nach einem der Ansprüche 1 und 2, dadurch gekennzeichnet, daß die die Kanäle der Semaphorstrecke bestimmenden Zeitintervalle für alle durch die Feststationen verwendbaren Trägerfrequenzen gleichzeitig erzeugt werden.

4. Verfahren nach Anspruch 3, angewandt in einem Mobilfunksystem vom Typ MZmZT (Mehrfachzugriff mit Zeitteilung) / MZmFT (Mehrfachzugriff mit Frequenzteilung), wobei in diesem System jede Feststation mit einer wechselnden Anzahl Trägerfrequenzen versehen sein kann und jede Trägerfrequenz zum Übertragen von MZmZT-Rahmen mit n zeitmultiplexten Zeitübertragungskanälen vorgesehen ist, dadurch gekennzeichnet, daß die die Kanäle der Semaphorstrecke bestimmenden Zeitintervalle durch eine Dauer voneinander getrennt werden, die ein Mehrfaches der Periode des MZmZt-Rahmens ist und wobei in der Semaphorrahmenperiode die Anzahl die Kanäle der Semaphorstrecke bestimmender Zeitintervalle der Größe $C_h$ des Zellenmusters entspricht, wobei die Feststationen eines Musters durch zirkulare Permutation in den die Kanäle der Semaphorstrecke bestimmenden Zeitintervallen und in allen Trägerfrequenzen übertragen.

5. Verfahren nach Anspruch 4, dadurch gekennzeichnet, daß zum Suchen eines freien Duplexkanals zur Übertragung zwischen der Feststation F und der Mobilstation M die Feststation F außerdem über den ihr zugeordneten Kanal der Semaphorstrecke die Information betreffs der zum Suchen eines freien Kanals in der Mobilstation M zu verwendenden Trägerfrequenz(en) überträgt.

6. Verfahren nach Anspruch 3, angewandt in einem Mobilfunksystem vom Typ MZmZT / MZmKT (Mehrfachzugriff mit Kodenteilung) / MZmFT, wobei in diesem System jede Feststation mit einer Anzahl wechselnder Trägerfrequenzen versehen sein kann und die MZmZT-Rahmen mit n zeitmultiplexten Zeitübertragungskanälen durch eine entsprechend bestimmten Gesetzen sprungweise variierende Trägerfrequenz unterstützt werden, dadurch gekennzeichnet, daß die Anzahl Trägerfrequenzen ein Mehrfaches der Größe $C_h$ des Zellenmusters ist und die Trägerfrequenzen in K Gruppen (K ist eine ganze Zahl) aufgeteilt sind, wobei die die Kanäle der Semaphorstrecke bestimmenden Zeitintervalle durch eine Dauer D, die ein Mehrfaches von N der Periode des MZmZT-Rahmens ist (wobei N eine ganze Zahl ist und eins mit $C_h$ ist) voneinander getrennt sind, wobei die Feststationen eines Zellenmusters durch zellulare Permutation in den die Kanäle der Semaphorstrecke bestimmenden Zeitintervallen und in allen Trägerfrequenzen jeder Gruppe von Trägerfrequenzen übertragen.

7. Verfahren nach Anspruch 6, dadurch gekennzeichnet, daß zum Suchen eines freien Duplexkanals zur Kommunikation zwischen der Feststation F und der Mobilstation M die Feststation F außerdem über denjenigen Kanal der Semaphorstrecke, die ihr zugeordnet ist, die Information betreffs der Gruppe oder der Gruppen von Trägerfrequenzen, die zum Suchen eines freien Kanals verwendbar sind.

8. Anordnung zum Gebrauch in einer Mobilstation zum Durchführen des Verfahrens nach einem der Ansprüche 1 bis 7, mit einem Empfänger (1) zum Empfangen mindestens einerseits von Informationen in bezug auf Übertragungskanäle und andererseits von Informationen in bezug auf Kanäle der Semaphorstrecke, mit einem mit dem Semaphorkanal verbundenen Empfangselement (4, 17), zum Liefern der Liste $L_2$ der belegten Kanäle in bezug auf eine Feststation, dadurch gekennzeichnet, daß sie Meßelemente (10, 15, 16) aufweist zum Messen der Pegel der über die Kanäle der Semaphorstrecke übertragenen Signale zum Bestimmen der Liste L von Feststationen Fi der Strömungszone, daß das Empfangselement dazu vorgesehen ist, außerdem die Liste $L_1$ der von der Feststation verwendeten Kanäle zu liefern, und daß die Anordnung ein Wahlelement zum Wählen des freien Kanals, ausgehend von den genannten Listen, aufweist.

9. Anordnung zum Gebrauch in einer Feststation zum Durchführen des Verfahrens nach einem der Ansprüche 1 bis 7, mit einem den Pegelmeßmitteln (24) zugeordneten Empfänger (20), einem Belegungsbestimmungselement (3) zum je nach der Pegelmessung Bestimmen des Zustandes der Belegung der Kanäle der ankommenden Strecke, einem Sender (20) zum in Richtung der Mobilstationen mittels eine Semaphorstrecke Ausstrahlen der Adressen der belegten Duplexkanäle in der ankommenden Strecke, dadurch gekennzeichnet, daß der Sender (20) zum mittels der Semaphorstrecke Ausstrahlen der Liste der von ihr selbst (F) verwendeten Kommunikationskanäle und derjenigen der Feststationen (Fi) der Störzone.

**FIG.1**

**FIG.5**

EP 0 209 185 B1

FIG.2

FIG.3

FIG.4